# EUROPEAN PATENT SPECIFICATION

(11) **EP 1 025 200 B1**
(45) Date of publication and mention of the grant of the patent: **26.05.2004**
(21) Application number: 98958862.9
(22) Date of filing: 22.10.1998
(51) Int. Cl.: C12C 5/02, C12C 3/00

(54) **IMPROVING THE FLAVOUR OF FERMENTED BEVERAGES**
VERBESSERUNG DER GESCHMACKSEIGENSCHAFTEN VON VERGORENEN GETRÄNKEN
AMELIORATION DE L'AROME DES BOISSONS FERMENTEES

(30) Priority: 23.10.1997 EP 97203291; 21.01.1998 EP 98200154
(43) Date of publication of application: 09.08.2000
(73) Proprietor: QUEST INTERNATIONAL B.V., 1411 GP Naarden (NL)
(72) Inventor: EVANS, David, John, NL-1222 PV Hilversum (NL); BRUIJNJE, Arnold, NL-1272 CG Huizen (NL); VAN LIER, Fransiscus, Petrus, NL-1273 CE Huizen (NL); VAN DORT, Johannes, Marinus, NL-3749 AE Lage Vuursche (NL); WEENEN, Hugo, NL-1261 RV Blaricum (NL)
(74) Representative: van Westenbrugge, Andries
(86) International application number: PCT/EP1998/006697
(87) International publication number: WO 1999/021956

(56) References cited:
- US-A- 5 137 741
- KARAHADIAN C ET AL: "Volatile compounds from Penicillium sp. contributing musty-earthy notes to Brie and Camembert cheese flavors." JOURNAL OF AGRICULTURAL AND FOOD CHEMISTRY, vol. 33, no. 3, 1985, pages 339-343, XP002102256 Dep. of Food Sci., Univ. of Wisconsin, Madison, Wisconsin 53706, USA
- GUTH, H.: "Identification of character impact odorants of different white wine varieties." JOURNAL OF AGRICULTURAL AND FOOD CHEMISTRY., vol. 45, no. 8, 27 August 1997, pages 3022-3026, XP002102257 WASHINGTON US

## Description

The invention relates to a process for improving the flavour of fermented beverages. Under fermented beverages are to be understood drinks such as beer, ale, shandy etc. which normally contain hop constituents and are generally known as malt beverages. The term fermented beverages as used herein also covers similar beverages prepared from non-malted cereals or from both malt and non-malted cereals.

Hop (Humulus lupulus), one of the traditional raw materials used in brewing, contributes to both the bitterness and the aroma of fermented malt beverages such as beer. Whilst, however, much is known about how hops influence the bitterness of beer, the formation and control of hop aroma is much more complex and not so well understood (Moir, M. Monogr. EBC, 22 : 165-180, 1994).

The introduction of hop aroma in beer is achieved in practice through the application of different brewing processes in combination with the selection of different hop varieties. In this way, the brewer can create an individual hop aroma for his products.

Kettle, late and dry hopping are all brewing processes which can produce beers with different levels of hop aroma. Constant aroma quality is, however, a problem because beers are brewed from natural materials which differ widely, e.g. due to different growing conditions every year, such as differences in amounts of sunshine and rain. The present invention especially aims at improving and controlling the late hop aroma of fermented malt beverages such as beer by a novel process.

The process of late hopping is one in which, traditionally whole hops, but increasingly hop products that contain the essential oil components of hop, are added at or near the end of the boiling stage of the brewing process (Gardner, D.S.J. Monogr. EBC, 22: 114-126 (1994). It is well known and widely accepted that this process, which results in very poor extraction of bitterness, can create a highly desirable hop aroma in beer. Furthermore, different varieties of hop also lead to different, and often characteristic, hop aromas. The portion of the resultant beer aroma created by late hopping is known in brewing circles as late hop aroma.

Despite well-documented brewing practices with which to introduce late hop aroma, the control of this flavour in beer is difficult to achieve. This is due to a number of reasons. Firstly, hops are agricultural products subject to seasonal and environmental variation. Additionally, some brewers store hops for one or two years to enable oxidation of hop oil and the formation of more desirable flavour components. This type of processing is very difficult to control. Finally, the brewing process also influences the extraction and chemistry of hop aroma. Brewers, therefore, in order to obtain better control of late hop aroma in their beers, have sought to identify the flavour impact components which contribute to the preferred forms of late hop aroma achieved by normal brewing practice (Peacock, M and Deinzer, M.L., J.Am.Soc.Brew.Chem. 39 (4): 774-777 (1981).

It is known from Deinzer, M and Yang, X., Monogr. EBC, 22:181-187 (1994) that late hop aroma is not simply a selected fraction of hop essential oil present in beer at an appropriate level. The brewing process itself transforms some of the native hop oil components into new, more desirable, aroma components. Additionally the relative levels of some of the hop oil and hop-derived components are changed by the brewing process. Altogether therefore hop aroma is a complex mixture of different types and different levels of flavour components derived from hop.

Oxygenated hydrocarbons of hop essential oil e.g. linalool (3,7-dimethyl-1,6-octadien-3-ol) and geraniol (3,7-dimethyl-2,6-octadien-1-ol, usually mixtures of cis- and trans isomers) have widely been implicated as contributors towards late hop flavour, as have various methyl esters, ketones, ethers and aldehydes. (Moir, M. Monogr. EBC, 22: 165-180, 1994). So far, however, commercially isolated combinations of these components do not compare in a satisfactory way with late hop aroma achieved via the brewing process. It is because the brewing process itself influences the formation of late hop aroma, that processes which attempt to fractionate late hop aroma from natural hop oil as with the development of the Late Hop Essences (Westwood and Daoud, EBC Congress: 579-586, 1985) do not fully achieve the desired flavour impression.

Further, US-A-5 137 741 discloses the use of a composition containing rose oxide and several other aromatic compounds for flavouring foodstuffs, cosmetics and detergents.

In Karahadian C. et al., "Volatile compounds from Penicillium sp. contributing musty-earthy notes to Brie and Camembert cheese flavors", Journal of Agricultural and Food Chemistry, vol. 33, no. 3, 1985, pages 339-343, Dept. of Food Sci., Univ. of Wisconsin, Madison, Wisconsin 53706, USA, it is shown that 1,5-octadien-3-one is one of the volatile compounds contributing to the mushroom-like, green plant-like aromas of Brie and Camembert cheese (cf. Abstract and Table I).

Finally in Guth, H.: "Identification of character impact odorants of different white wine varieties", Journal of Agricultural and Food Chemistry., vol. 45, no. 8, 27 August 1997, pages 3022-3026, Washington, USA, it is stated that cis-rose oxide is a key substance for the overall flavor of Gewürztraminer wine which is a fermented beverage. It has now been surprisingly found that the addition of certain flavour components can improve the flavour of fermented beverages.

According to a first embodiment of the invention there is provided a process for improving the flavour of fermented beverages comprising incorporating in said beverages a flavour comprising rose oxide and/or 1,5-octadien-3-one. Preferably, the beverage is a malt beverage such as beer. Rose oxide is defined as 4-methyl-2-(2-methyl-1-propenyl) tetrahydropyran and is usually commercially available as a mixture of various isomers which is suitable in the practice of the present invention. 1,5-octadien-3-one is a known compound (see for example J. Sci. Fd. Agri. 28, 1019-1024, 1977).

According to a preferred embodiment of the invention the flavour comprises a mixture of rose oxide and 1,5-octadien-3-one. This mixture seems to be a synergistic organoleptic combination.

According to another preferred embodiment of the invention the flavour comprises rose oxide and/or 1,5-octadien-3-one and at least one hop bittering compound. Hop bittering compound(s) include one or more isomerized α-hop acids (e.g. IsoHopCO2N, ex English Hop Products Ltd, Paddock Wood, Tonbridge TN12 6BY, UK); and/or reduced isomerized α-hop acids (e.g. TetraHopCO2N, ex English Hop Products Ltd, Paddock Wood, Tonbridge TN12 6BY, UK) and/or rho-hop acids (e.g. RholsoHopCO2N ex. English Hop Products Ltd, Paddock Wood, Tonbridge TN12 6BY, UK). Typically, the isomerized α-hop acids are predominantly a mixture of isomerized humulones, the reduced α-hop acids are a mixture of tetrahydroisohumulones and hexahydroisohumulones and rho-hop acids are mixtures of rho-isohumulones. Details about most of these compounds are given in Guzinski, J.A. (1994) in Monograph - European Brewing Convention, 22: 105-113, " Practical considerations of reduced hop extracts".

Preferably the hop bittering compound(s) is/are incorporated in fermented beverages in a weight level of from 100 micrograms/kilogram to 100 milligrams/kilogram, more preferably in a level of from 2 milligrams/kilogram to 25 milligrams/kilogram.

Preferably 1,5-octadien-3-one is incorporated in the beverage in a weight level of from 0.1 nanogram/kilogram to 100 micrograms/kilogram, more preferably from 0.5 nanogram/kilogram to 50 micrograms/kilogram. Preferably rose oxide is incorporated in the beverage in a weight level of from 10 nanograms/kilogram to 1 milligram/kilogram, especially from 50 nanograms/kilogram to 0.5 milligram/kilogram.

When a mixture of rose oxide and 1,5-octadien-3-one is used, preferably the weight ratio of rose oxide to 1,5-octadien-3-one is from 100:1 to 1:10, especially from 50:1 to 1:5.

According to another embodiment the invention provides a flavour concentrate for fermented beverages which comprises rose oxide and/or 1,5-octadien-3-one.

Preferably the invention provides a flavour concentrate for fermented beverages comprising both rose oxide and 1,5-octadien-3-one. More preferably the invention provides a flavour concentrate in which the weight ratio of rose oxide to 1,5-octadien-3-one is from 100:1 to 1:10, especially from 50:1 to 1:5. More preferably the flavour concentrate also comprises at least one hop bittering compound as described above.

When a hop bittering compound is present in the flavour concentrate the amount present in relation to rose oxide and/or 1,5-octadien-3-one is preferably in the range 10³ to 10⁷ parts by weight hop bittering compound to 1 part by weight of rose oxide and/or 1,5-octadien-3-one and more preferably in the range 10⁵ to 10⁷ parts by weight of hop bittering compound to 1 part by weight of rose oxide and/or 1,5-octadien-3-one.

A convenient diluent for a flavour concentrate is ethanol and a preferred concentrate according to the invention comprises a flavour as herein described, optionally a hop bittering compound, and ethanol.

According to another embodiment the invention provides a process for preparing a flavouring concentrate for fermented beverages in which linolenic acid derived from beer raw material, e.g. hops, is oxidized to 1,5-octadien-3-one.

According to another embodiment the invention provides a process for preparing a flavouring concentrate for fermented beverages in which hop derived monoterpenoids are converted into rose oxide.

The flavour concentrate may also comprise one or more other compounds which are known to contribute to beer and/or hop flavour such as 1-heptanol, 1-octanol, cis-3-hexan-1-ol, 2-pentanol, 2-undecanol, 2-nonanone, 2-decanone, 2-undecanone, linalol, geraniol, alpha-terpineol, humulenol, linalol oxide, caryophyllene epoxide, hop ether, humulene epoxide etc. The preferred other compounds are linalol and geraniol.

According to another embodiment a fermented beverage is provided, said beverage having been flavoured by incorporating rose oxide and/or 1,5-octadien-3-one.

According to a preferred embodiment of the invention the beverage has been flavoured with both rose oxide and 1,5-octadien-3-one.

Preferably, the amount of 1,5-octadien-3-one used to flavour the beverage is from 0.1 nanogram/kilogram of beverage to 100 micrograms/kilogram of beverage, more preferably from 0.5 nanogram/kilogram to 50 micrograms/kilogram. Preferably the amount of rose oxide used to flavour the beverage is from 10 nanograms/kilogram of beverage to 1 milligram/kilogram of beverage, especially from 50 nanograms/kilogram to 0.5 milligram/kilogram.

Preferably, when rose oxide and 1,5-octadien-3-one are used to flavour the beverage the weight ratio of rose oxide to 1,5-octadien-3-one is from 100:1 to 1:10, especially from 50:1 to 1:5.

More preferably the fermented beverage has been flavoured by incorporating rose oxide and/or 1,5-octadien-3-one and at least one hop bittering compound.

Rose oxide in a flavouring grade can be obtained commercially, but preferably it is prepared as hop-derived material from citronellol (3,7-dimethyl-6-octen-1-ol) by singlet oxidation (Cf Ohloff et al, Angew. Chem. 73, 578 ff, (1961)). Citronellol or a fraction rich in citronellol can be isolated from hop oil by distillation of hop oil or prepared from other hop-derived terpenes (e.g. myrcene = 7-methyl-3-methylene-1,6-octadiene).

1,5-octadien-3-one can be chemically synthesized (cf J. Sci. Fd. Agric. 28, 1019-1024, 1977), but preferably it is prepared as a material derived from beer raw material. All cis linolenic acid or a fraction rich in linolenic acid is isolated by extraction of beer raw material (such as hop, malt or cereal). This linolenic acid is then subjected to lipoxygenase and lyase catalysis according to the method described by M. Wurzenburger and W. Grosch (Lipids, 21, 261, 1982), and by R. Tressel, D. Bahri and K. H. Engel (J. Agric. Food Chem., 30, 89, 1982). The resulting 1,5-octadien-3-ol is oxidised by either a dehydrogenase enzyme, catalytic dehydrogenation, catalytic oxidation or normal chemical oxidation (cf J. Sci. Fd. Agric. 28, (1019-1024, 1977).

Although the invention is preferably applied in connection with late hop aroma in beer as described above it may also be applied in connection with other fermented beverages particularly fermented malt beverages. When applied in connection with late hop aroma in beer the flavour concentrate is preferably incorporated near the end of the brewing process, in particular after final filtration.

In this text all parts and percentages are on a weight basis unless otherwise indicated.

The invention is illustrated by the following examples:

### Example 1

A beer flavour concentrate was prepared by mixing the following ingredients in amounts indicated below:

| | |
|---|---|
| Rose oxide | 0.002 g |
| Geraniol | 0.1 g |
| Linalol | 2.0 g |
| Hop oil* | 1.0 g |
| Ethanol | 996.898g |

| | |
|---|---|
| * Cascade, Hop oil, ex English Hop Products Ltd, Hop Pocket Lane, Paddock Wood, Tonbridge TN12 6BY, UK | |

### Example 2

The beer flavour concentrate of Example 1 was dosed into Heineken beer ex package at 0.1 g/l. Bottled Heineken was opened and dosed with the flavour concentrate, the bottles were recrowned, gently inverted and allowed to stand for 30 minutes to equilibrate and then tasted. Beer temperatures were about 6 - 8C. The beer was tasted against a Heineken beer dosed with the same flavour concentrate except the rose oxide was omitted. An experienced panel of beer tasters (8 persons) preferred the hop character of the beer dosed with rose oxide over the control (7/8 tasters)

### Example 3

A beer flavour concentrate was prepared by mixing the following ingredients in amounts indicated below:

| | |
|---|---|
| 1,5-Octadien-3-one | 0.001 g |
| Geraniol | 0.1 g |
| Linalol | 2.0 g |
| Hop oil* | 1.0 g |
| Ethanol | 996.8999 g |

| | |
|---|---|
| * Cascade, Hop oil, ex English Hop Products Ltd, Hop Pocket Lane, Paddock Wood, Tonbridge TN12 6BY, UK | |

### Example 4

The beer flavour concentrate of Example 3 was dosed into Heineken beer ex package at 0.1 g/l. The procedure of Example 2 was followed. The beer was tasted against a Heineken beer dosed with the same flavour concentrate except the 1,5-octadien-3-one was omitted. An experienced panel of beer tasters (8 persons) preferred the hop character of the beer dosed with 1,5-octadien-3-one over the control (7/8 tasters)

### Example 5

A beer flavour concentrate was prepared by mixing the following ingredients in amounts indicated below:

| | |
|---|---|
| Rose oxide | 0.002 g |
| 1,5-Octadien-3-one | 0.0001 g |
| Geraniol | 0.1 g |
| Linalol | 2.0 g |
| Hop oil* | 1.0 g |
| Ethanol | 996.8979 g |

| | |
|---|---|
| * Cascade, Hop oil, ex English Hop Products Ltd, Hop Pocket Lane, Paddock Wood, Tonbridge TN12 6BY, UK | |

### Example 6

The beer flavour concentrate of Example 5 was dosed into Heineken beer ex package at 0.1 g/l. The procedure of Example 2 was followed. The beer was tasted against a Heineken beer dosed with the same flavour concentrate except the 1,5-octadien-3-one and the rose oxide were omitted. An experienced panel of beer tasters (8 persons) preferred the hop character of the beer dosed both with rose oxide and 1,5-octadien-3-one over the control (8/8 tasters)

### Example 7

Two beers were produced for this example. The first (Beer A) was prepared in the absence of hop additions to the kettle except for a base kettle extract (Base extract, ex English Hop Products at 0.1 g/l to kettle from start of boil). The second (Beer B) was prepared in an identical way to Beer A except that no Base Extract was added, but Hop additions to the kettle were made with Type 90 Hop Pellets of Northern Brewer to the start of the boil to achieve a final beer bitterness level of 24 EBU (IOB Recommended Methods of Analysis, 1991) "Bitterness Units".

Beer A, being "unhopped", was treated by pre-filtration addition with the following beer flavour concentrate at a dose level of 1.0 g/l:

| | |
|---|---|
| Rose oxide | 0.0002 g |
| 1,5-Octadien-3-one | 0.00001 g |
| Geraniol | 0.01 g |
| Linalol | 0.2 g |
| Hop oil* | 0.1 g |
| IsoHopCO2N** | 86.7 g |
| Ethanol | 912.9898 g |

| | |
|---|---|
| * Cascade, Hop oil, ex English Hop Products Ltd, Hop Pocket Lane, Paddock Wood, Tonbridge TN12 6BY, UK. | |
| ** IsoHopCO2N standardized to 30 isohumuione wt/vol, ex English Hop Products Ltd, Hop Pocket Lane, Paddock Wood, Tonbridge TN12 6BY, UK. | |

An experienced panel of beer tasters (8 persons) preferred the hop aroma and bitterness character of the beer dosed with the pre-filtration addition of beer flavour concentrate (Beer A) compared with that of Beer B.

## Claims

1. A process for improving the flavour of fermented beverages, **characterised in that** a flavour comprising rose oxide and/or 1,5-octadien-3-one is incorporated in said beverages.

2. A process according to claim 1, **characterised in that** the beverage is a fermented malt beverage.

3. A process according to claim 1 or 2, **characterised in that** the flavour comprises at least one hop bittering compound.

4. A process according to any one of the preceding claims, **characterised in that** 1,5-octadien-3-one is incorporated in fermented beverages at a weight level in the range 0.1 nanogram per kilogram of beverage to 100 microgram per kilogram of beverage.

5. A process according to any one of the preceding claims, **characterised in that** rose oxide is incorporated in fermented beverages at a weight level in the range 10 nanogram per kilogram of beverage to 1 milligram per kilogram of beverage.

6. A process according to any one of claims 3 to 5, **characterised in that** the at least one hop bittering compound is incorporated at a level in the range 100 microgram per kilogram of beverage to 100 milligram per kilogram of beverage.

7. A process according to any one of the preceding claims, **characterised in that** rose oside and 1,5-octadien-3-one are incorporated in a weight ratio of rose oxide to 1,5-octadien-3-one in the range 100:1 to 1:10, preferably in the range 50:1 to 1:5.

8. A flavour concentrate for fermented beverages, **characterised in that** the flavour concentrate comprises both rose oxide and 1,5-octadien-3-one in a weight ratio of rose oxide to 1,5-octadien-3-one in the range 100:1 to 1:10, preferably in the range 50:1 to 1:5.

9. A flavour concentrate according to claim 8, **characterised in that** the flavour concentrate also comprises at least one hop bittering compound.

10. A flavour concentrate according to claim 9, **characterised in that** the hop bittering compound is present in an amount in the range 10³ to 10⁷ parts by weight hop bittering compound to 1 part by weight rose oxide and/or 1,5-octadien-3-one.

11. A flavour concentrate according to any one of claims 8 to 10, **characterised in that** the concentrate further comprises ethanol.

12. A flavour concentrate according to any one of claims 8 to 11, **characterised in that** the concentrate further comprises geraniol and/or linalol.

13. A fermented beverage, **characterised in that** the beverage has been flavoured by incorporating rose oxide and 1,5-octadien-3-one.

14. A fermented beverage according to claim 13, **characterised in that** the beverage has been flavoured with at least one hop bittering compound.

## Patentansprüche

1. Verfahren zum Verbessern des Geschmacks von vergorenen Getränken, **dadurch gekennzeichnet, dass** ein Geschmacksstoff, der Rosenoxid und/oder 1,5-Octadien-3-on umfasst, den Getränken zugesetzt wird.

2. Verfahren nach Anspruch 1, **dadurch gekennzeichnet, dass** das Getränk ein vergorenes Malzgetränk ist.

3. Verfahren nach Anspruch 1 oder 2, **dadurch gekennzeichnet, dass** der Geschmacksstoff wenigstens einen Hopfenbitterstoff umfasst.

4. Verfahren nach einem der vorangehenden Ansprüche, **dadurch gekennzeichnet, dass** 1,5-Octadien-3-on vergorenen Getränken in einem Gewichtsanteil im Bereich von 0,1 Nanogramm pro Kilogramm Getränk bis 100 Mikrogramm pro Kilogramm Getränk zugesetzt wird.

5. Verfahren nach einem der vorangehenden Ansprüche, **dadurch gekennzeichnet, dass** Rosenoxid vergorenen Getränken in einem Gewichtsanteil im Bereich von 10 Nanogramm pro Kilogramm Getränk bis 1 Milligramm pro Kilogramm Getränk zugesetzt wird.

6. Verfahren nach einem der Ansprüche 3 bis 5, **dadurch gekennzeichnet, dass** der wenigstens eine Hopfenbitterstoff in einem Anteil im Bereich von 100 Mikrogramm pro Kilogramm Getränk bis 100 Milligramm pro Kilogramm Getränk zugesetzt wird.

7. Verfahren nach einem der vorangehenden Ansprüche, **dadurch gekennzeichnet, dass** Rosenoxid und 1,5-Octadien-3-on in einem Gewichtsverhältnis von Rosenoxid zu 1,5-Octadien-3-on im Bereich von 100:1 bis 1:10, vorzugsweise im Bereich von 50:1 bis 1:5 zugesetzt werden.

8. Geschmacksstoffkonzentrat für vergorene Getränke, **dadurch gekennzeichnet, dass** das Geschmacksstoffkonzentrat sowohl Rosenoxid als auch 1,5-Octadien-3-on in einem Gewichtsverhältnis von Rosenoxid zu 1,5-Octadien-3-on im Bereich von 100:1 bis 1:10, vorzugsweise im Bereich von 50:1 bis 1:5 umfasst.

9. Geschmacksstoffkonzentrat nach Anspruch 8, **dadurch gekennzeichnet, dass** das Geschmacksstoffkonzentrat auch wenigstens einen Hopfenbitterstoff umfasst.

10. Geschmacksstoffkonzentrat nach Anspruch 9, **dadurch gekennzeichnet, dass** der Hopfenbitterstoff in einer Menge im Bereich von 10³ bis 10⁷ Gewichtsteilen Hopfenbitterstoff zu 1 Gewichtsteil Rosenoxid und/oder 1,5-Octadien-3-on vorhanden ist.

11. Geschmacksstoffkonzentrat nach einem der Ansprüche 8 bis 10, **dadurch gekennzeichnet, dass** das Konzentrat außerdem Ethanol umfasst.

12. Geschmacksstoffkonzentrat nach einem der Ansprüche 8 bis 11, **dadurch gekennzeichnet, dass** das Konzentrat außerdem Geraniol und/oder Linalol umfasst.

13. Vergorenes Getränk, **dadurch gekennzeichnet, dass** das Getränk durch Zusetzen von Rosenoxid und 1,5-Octadien-3-on aromatisiert worden ist.

14. Vergorenes Getränk nach Anspruch 13, **dadurch gekennzeichnet, dass** das Getränk mit wenigstens einem Hopfenbitterstoff aromatisiert worden ist.

## Revendications

1. Procédé pour améliorer l'arôme des boissons fermentées, **caractérisé en ce qu'**un arôme comprenant de l'oxyde de rose et/ou du 1,5-octadiène-3-one est incorporé dans lesdites boissons.

2. Procédé selon la revendication 1, **caractérisé en ce que** la boisson est une boisson fermentée à base de malt.

3. Procédé selon la revendication 1 ou 2, **caractérisé en ce que** l'arôme comporte au moins un composé rendant le houblon amer.

4. Procédé selon l'une quelconque des revendications précédentes, **caractérisé en ce que** le 1,5-octadiène-3-one est incorporé aux boissons fermentées selon un niveau de poids de l'ordre de 0,1 nanogramme par kilogramme de boisson à 100 microgrammes par kilogramme de boisson.

5. Procédé selon l'une quelconque des revendications précédentes, **caractérisé en ce que** l'oxyde de rose est incorporé dans les boissons fermentées selon un niveau de poids de l'ordre de 10 nanogrammes par kilogramme de boisson à 1 milligramme par kilogramme de boisson.

6. Procédé selon l'une quelconque des revendications 3 à 5, **caractérisé en ce que** l'au moins un composé rendant le houblon amer est incorporé selon un niveau de l'ordre de 100 microgrammes par kilogramme de boisson à 100 milligrammes par kilogramme de boisson.

7. Procédé selon l'une quelconque des revendications précédentes, **caractérisé en ce que** l'oxyde de rose et le 1,5-octadiène-3-one sont incorporés selon un rapport en poids entre l'oxyde de rose et le 1,5-octadiène-3-one de l'ordre de 100:1 à 1:10, de préférence de l'ordre de 50:1 à 1:5.

8. Concentré aromatique pour boissons fermentées, **caractérisé en ce que** le concentré aromatique comprend tant de l'oxyde de rose que du 1,5-octadiène-3-one selon un rapport en poids entre l'oxyde de rose et le 1,5-octadiène-3-one de l'ordre de 100:1 à 1:10, de préférence de l'ordre de 50:1 à 1:5.

9. Concentré aromatique selon la revendication 8, **caractérisé en ce que** le concentré aromatique comprend également au moins un composé rendant le houblon amer.

10. Concentré aromatique selon la revendication 9, **caractérisé en ce que** le composé rendant le houblon amer est présent en une quantité de l'ordre de 10³ à 10⁷ parts en poids de composé rendant le houblon amer pour 1 part en poids d'oxyde de rose et/ou de 1,5-octadiène-3-one.

11. Concentré aromatique selon l'une quelconque des revendications 8 à 10, **caractérisé en ce que** le concentré comprend, en outre, de l'éthanol.

12. Concentré aromatique selon l'une quelconque des revendications 8 à 11, **caractérisé en ce que** le concentré comprend, par ailleurs, du géraniol et/ou du linalol.

13. Boisson fermentée, **caractérisée en ce que** la boisson a été aromatisée en incorporant de l'oxyde de rose et du 1,5-octadiène-3-one.

14. Boisson fermentée selon la revendication 13, **caractérisée en ce que** la boisson a été aromatisée par au moins un composé rendant le houblon amère.
